(19) Europäisches Patentamt
European Patent Office
Office européen des brevets

(11) **EP 2 681 633 B1**

(12) **EUROPÄISCHE PATENTSCHRIFT**

(45) Veröffentlichungstag und Bekanntmachung des Hinweises auf die Patenterteilung:
**30.05.2018   Patentblatt 2018/22**

(21) Anmeldenummer: **12709791.3**

(22) Anmeldetag: **27.02.2012**

(51) Int Cl.:
***G05B 19/042*** *(2006.01)*

(86) Internationale Anmeldenummer:
**PCT/EP2012/000840**

(87) Internationale Veröffentlichungsnummer:
**WO 2012/116802 (07.09.2012 Gazette 2012/36)**

(54) **NEUARTIGE KOMBINATION VON FEHLERKORREKTUR UND FEHLERERKENNUNG FÜR DIE ÜBERTRAGUNG DIGITALER DATEN**

NOVEL COMBINATION OF ERROR CORRECTION AND ERROR DETECTION FOR THE TRANSMISSION OF DIGITAL DATA

NOUVELLE COMBINAISON DE CORRECTION D'ERREUR ET DE DÉTECTION D'ERREUR POUR LA TRANSMISSION DE DONNÉES NUMÉRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2011   DE 102011012766**
**05.05.2011   EP 11003691**

(43) Veröffentlichungstag der Anmeldung:
**08.01.2014   Patentblatt 2014/02**

(73) Patentinhaber: **AS-International Association e.V.**
**63571 Gelnhausen (DE)**

(72) Erfinder: **BREUNINGER, Matthias**
**70569 Stuttgart (DE)**

(74) Vertreter: **Vonnemann, Gerhard et al**
**Iridium IP**
**Friedrich-König-Strasse 3-5**
**68167 Mannheim (DE)**

(56) Entgegenhaltungen:
EP-A1- 1 170 870        US-A1- 2006 212 781
US-A1- 2008 294 967     US-A1- 2009 245 432

**Beschreibung**

Die Erfindung betrifft ein Verfahren zur Übertragung digitaler Daten, insbesondere für die Automatisierungstechnik, sowie einen Empfänger und Sender, die jeweils mit einem derartigen Verfahren betrieben werden.

Aus der DE 100 32 533 A1 ist ein Kommunikationssystem bekannt, umfassend einen Master und mehrere Slaves, die miteinander über einen Zweileiterbus kommunizieren. Dabei werden die Informationen der Slaves auf Unverfälschtheit anhand von wechselnden Bit-Mustern geprüft und unverfälschte Informationen miteinander zu sicherheitsrelevanten Ausgangssignalen verknüpft. Derartige Aktuator-Sensor-Interface-Systeme sind ebenfalls in Kriesel, W., Madelung O. W., AS-Interface, Das Aktuator-Sensor-Interface für die Automatisierung, Hanser-Verlag, 2. überarbeitete Auflage, 1999, beschrieben.

Die US 2008/294967 A1 betrifft ein Verfahren zur Übertragung digitaler Daten, wobei ein digitales, über einen Kanal empfangenes, verrauschtes Codewort mittels eines Kanal-Dekodierers korrigiert und auf Gültigkeit geprüft wird. Dabei wird ein ungültiges Codewort verworfen und das empfangene, verrauschte Codewort neu angefordert, während ein gültiges Codewort weiterverarbeitet wird. Nach US 2008/294967 A1 wird schließlich eine Differenz ermittelt und diese Differenz mit einem Grenzwert verglichen, wobei das Codewort verworfen wird, wenn die Differenz kleiner oder gleich dem Grenzwert ist.

Die US 2009/245432 A1 offenbart ein herkömmliches Mapping/Demappingverfahren, wobei auf Senderseite das Maping und auf Empfängerseite vor dem Dekodiererer das Demapping erfolgt.

Nachteilig an den bekannten Lösungen ist, dass die mögliche, anzuschließende Anzahl an Geräten und/oder die möglich verwendbaren Leitungslängen begrenzt sind. Zudem werden Übertragungstechniken verwendet, die teilweise veraltet sind und mit denen eine erhöhte Datenübertragungsrate nur bedingt möglich ist. Es besteht daher ein zunehmender Bedarf an Datenübertragungsverfahren, die mit neueren Techniken eine erhöhte Datenübertragungsrate zu lassen, ohne dass die gerade für die Automatisierungstechnik hohen Anforderungen an die Datenübertragungssicherheit Einbußen hinnehmen müssen.

Als ein Aspekt der Erfindung wird somit vorgeschlagen, bei einem Verfahren zur Übertragung digitaler Daten, insbesondere für die Automatisierungstechnik, ein digitales, über einen Kanal empfangenes, verrauschtes Codewort mittels eines Kanal-Dekodierers zu korrigieren und auf Gültigkeit zu prüfen. Dabei wird ein ungültiges Codewort verworfen und gegebenenfalls das empfangene, verrauschte Codewort neu angefordert, während ein gültiges Codewort weiterverarbeitet wird. Mittels einer Metrik wird aus dem empfangenen, verrauschten Codewort und dem gültigen Codewort eine Maßzahl ermittelt. Dabei wird das gültige Codewort verworfen und gegebenenfalls das empfangene, verrauschte Codewort neu angefordert, wenn die Maßzahl einen vorbestimmten Schwellenwert erreicht und/oder überschreitet. Dabei wird vor der Verarbeitung durch den Kanal-Dekodierer das empfangene Codewort mittels eines Demappers entmappt. Nach der Verarbeitung durch den Kanal-Dekodierer wird das gültige Codewort mittels eines Mappers gemappt.

Vorteilhaft können durch die Einführung der Metrik die nicht erkannten Restfehler minimiert werden. Nachdem der Kanal-Dekodierer ein über einen Kanal empfangenes Codewort decodiert und als gültig eingestuft hat, kann der Kanal-Dekodierer letztlich keine Aussage mehr darüber treffen, ob das gefundene, gültige Codewort das ursprünglich gesendete ist oder nicht. Wurde somit ein verfälschtes Codewort durch den Kanal-Dekodierer für gültig erklärt, so kann dieser Fehler zunächst nicht erkannt werden. Ziel der Metrik ist es, eben diese Fehler, die durch den Kanal-Dekodierer nicht erkannt werden, zu erkennen und damit den Restfehler, also die verbleibende Anzahl an nicht erkannten Fehlern, deutlich zu minimieren.

Dabei versteht man unter Automatisierungstechnik eine Wissenschaftsrichtung des Ingenieurswesens, mithilfe derer Maschinen oder Anlagen automatisiert werden können. Um nun Maschinen oder Anlagen zu automatisieren, müssen die einzelnen Komponenten wie beispielsweise Sensoren, Controller oder Aktuatoren miteinander Daten austauschen. Üblicherweise weisen derartige Daten vorwiegend eine digitale Natur auf. Jedoch kann durch eine fehlerhafte Datenübertragung die Information verfälscht werden und die Maschine oder die Anlage beschädigt werden oder die auf den Maschinen und Anlagen produzierten Produkte einen hohen Ausschuss aufweisen. Zudem können die Daten auch sicherheitsrelevant sein, so dass infolge einer Informationsverfälschung Verletzungsgefahr für das Bedienpersonal oder für Menschen in der Umgebung der Maschine oder Anlage besteht. Demzufolge muss bei der Datenübertragung im Bereich der Automatisierungstechnik eine sehr geringe Restbitfehlerwahrscheinlichkeit vorliegen, damit die Maschinen bzw. Anlagen reibungslos, fehlerfrei und sicherheitstechnisch einwandfrei funktionieren. Kann dabei die geforderte geringe Restbitfehlerwahrscheinlichkeit bei einem Datenübertragungsverfahren nicht erreicht werden, so ist dasselbe nicht für die Automatisierungstechnik geeignet.

Unter einem Kanal kann einerseits eine physische Datenleitung verstanden werden, die zumindest zwei Komponenten der Anlage oder Maschine miteinander verbindet. Andererseits kann darunter aber auch ein Funkkanal verstanden werden, wobei in diesem Falle die Datenübermittlung über den Kanal mittels Funktechnik vorgenommen wird.

Unter einem Codewort versteht man ein Datenwort, bestehend aus zumindest einem Bit, das mittels eines Kanal-Kodierers codiert worden ist. Die Kodierung des Datenwortes zu einem Codewort mittels eines Kanal-Kodierers in einem Sender führt zu einer Struktur des Codewortes, die Redundanzen enthält und die aufgrund dementsprechender Algorithmen eine Korrektur und eine Prüfung auf Gültigkeit mittels eines Kanal-Dekodierers im Empfänger ermöglicht und die Anzahl verbleibender Datenübertragungsfehler reduziert. Die Kanal-Kodierung/Dekodierung dient somit der Korrektur von fehlerhaft übertragenen Codewörtern und somit der Erhöhung der Datenübertragungssicherheit. Ein ungültiges Codewort ist demzufolge ein Codewort, das auch nach Korrektur durch den Kanal-Dekodierer keine gültige Struktur aufweist und demzufolge durch die Datenübertragung derartig verändert worden ist, dass daraus kein gültiges Codewort mehr konstruiert werden kann. Ein derartig ungültiges Codewort ist somit als fehlerhaft übertragen erkannt worden und kann nicht mehr weiterverarbeitet werden, so dass es gegebenenfalls nochmals von dem Sender angefordert und neu übertragen werden muss. Ein gültiges Codewort, korrigiert oder unkorrigiert, weist eine gültige Struktur auf und ist demzufolge zumindest hinsichtlich der Fehlererkennungsfähigkeit des Kanal-Dekodierers ordnungsgemäß übertragen oder korrigiert worden. Jedoch können auch gültige Codewörter fehlerbehaftet sein, so dass zwar durch Korrektur des empfangenen Codewortes ein gültiges Codewort mittels des Kanal-Dekodierers generierbar ist, dieses jedoch trotzdem durch eine fehlerhafte Datenübertragung einen verfälschten Inhalt aufweist.

Unter einer Metrik bzw. einer Softwaremetrik ist eine Funktion bzw. eine Berechnung zu verstehen, die zumindest eine Eigenschaft einer Kodierung, eines Programmflusses, eines Softwarebausteins, eines Datenwortes oder eines Codewortes in einen Zahlenwert bzw. eine Maßzahl transformiert. Mittels dieser Maßzahl ist dann ein formaler Vergleich oder eine Bewertung beispielsweise eines Datenwortes oder eines Codewortes möglich. So kann die Maßzahl im vorliegenden Fall als ein Maß für die Fehlerwahrscheinlichkeit eines gültigen Codewortes verwendet werden.

Demzufolge wird das gültige Codewort als fehlerbehaftet angesehen, wenn die Maßzahl einen vorbestimmten Schwellenwert erreicht und/oder überschreitet. In diesem Falle stellt der vorbestimmte Schwellenwert das Kriterium dar, ab dem das gültige Codewort zwar durch den Kanal-Dekodierer korrigiert werden konnte und demzufolge in eine gültige Struktur gebracht werden konnte, aber dennoch durch eine zu stark fehlerbehaftete Datenübertragung verfälscht worden ist.

Das Codewort wird vor der Verarbeitung durch den Kanal-Dekodierer mittels des Demappers entmappt und nach der Verarbeitung durch den Kanal-Dekodierer mittels des Mappers gemappt, damit das decodierte Codewort mit dem empfangenen, verrauschten verglichen und die Maßzahl mittels der Metrik berechnet werden kann.

Vorteilhaft kann durch einen derartigen Mapping-Prozess das Datenwort in eine Struktur gebracht werden, die eine höhere Datenübertragungsrate ermöglicht. Dadurch kann die auch in der Automatisierungstechnik ansteigende Datenflut schneller bewältigt werden, so dass der durch die Datenübermittlung resultierende Zeitversatz geringer ausfallen kann. Zudem kann über weniger Kanäle mehr Datenvolumen übertragen werden und es kann beispielsweise ein Kanal auch für mehrere Datenübertragungen verwendet werden.

Dabei versteht man unter einem Mapping-Prozess, der in einem Mapper bzw. Demapper durchgeführt wird, einen Prozess, der ein Datenwort von der einen Struktur in eine andere Struktur konvertiert. So kann beispielsweise ein eindimensionales Datenwort in eine zweidimensionale, zueinander orthogonale Struktur gemappt werden, so dass eine komprimierte Übertragung des Datenwortes möglich wird.

Dabei kann zur Korrektur und Gültigkeitsprüfung zumindest einer der folgenden Fehlerschutzcodes verwendet werden:

- ein BCH-Code (Bose-Chaudhuri-Hocquenghem),
- ein RS-Code (Reed-Solomon)
- ein RM-Code (Reed-Muller)
- ein LDPC-Code (Low-Density-Parity-Check).

Bei kurzen Codewortlängen sind vor allem die Verwendung von BCH-Codes als Fehlerschutzcodes vorteilhaft, wobei mittels eines BCH-Dekodierers die empfangenen Codewörter korrigiert und auf Gültigkeit geprüft werden. Dabei sind BCH-Codes zyklische fehlerkorrigierende Codes. Mittels des BCH-Verfahrens können mehrere 1-Bit Fehler in einem längeren Codewort korrigiert werden. Dabei können die Kodierung und die Dekodierung mittels verschiedener Verfahren erfolgen. So kann die Kodierung durch die Ermittlung des Divisionsrestes zweier binärer Polynome erfolgen, während bei der Dekodierung zur Ermittlung der Fehlerposition im Codewort ein binäres Fehlerpolynom ermittelt wird. Beides lässt sich in digitaler Hardware effizient und kostengünstig implementieren.

Kurze Codewortlängen sind besonders dann bevorzugt, wenn kurze Reaktionszeiten bzw. eine hohe Echtzeitanforderung gewünscht sind. In diesem Fall sind BCH-Codes vorteilhaft einsetzbar, da sie eine hohe Fehlerkorrekturrate aufweisen und einfach zu implementieren sind.

Wird nun ein Mapping-Prozess mittels eines Mappers bzw. Demappers verwendet, so kann aus dem empfangenen, verrauschten Codewort und dem zugehörigen gültigen, gemappten Codewort mittels der Metrik eine Maßzahl ermittelt werden. Dabei kann das gültige, gemappte Codewort bzw. das empfangene, verrauschte Codewort verworfen werden und gegebenenfalls neu angefordert werden, wenn die Maßzahl einen vorbestimmten Schwellenwert erreicht und/oder überschreitet.

Vorteilhaft kann auch bei Verwendung eines Mapping-Prozesses eine Maßzahl ermittelt werden, so dass mittels des Mapping-Prozesses eine komprimierte Datenübertragung möglich wird, ohne dass auf das Anwenden der Metrik verzichtet werden muss. Demzufolge können modernere, neuere Datenübertragungsverfahren verwendet werden, die eine hohe Datenübertragungsrate aufweisen, ohne dass die für die Automatisierungstechnik geforderte hohe Datensicherheit darunter leidet, weil mittels der Metrik eine deutliche Minimierung der Restbitfehlerwahrscheinlichkeit gelingt.

Dabei können der Mapper und der Demapper jeweils zumindest eines der folgenden Umwandlungsverfahren bzw. einen der folgenden Mapping-Prozesse verwenden:

- ein MPSK-Verfahren (Phasenmodulation mit M Phasen/Zuständen),
- ein MQAM-Verfahren (Quadratur-Amplituden-Modulation mit M Zuständen)
- ein MASK-Verfahren (Amplitudenmodulation mit M Zuständen).

In Verbindung mit einem PSK-Verfahren, ASK-Verfahren und/oder QAM-Verfahren können mittels des OFDM-Verfahrens, das ein Modulationsverfahren mit mehreren orthogonalen Trägersignalen darstellt, vorteilhaft Datenwörter auf mehrere Teildatenwortströme aufgeteilt werden, und über orthogonal zueinander stehende Trägersignale bzw. Trägerfrequenzen gegebenenfalls parallel und somit mit höherer Datenrate übertragen werden.

Bei dem 4PSK-Verfahren oder QPSK-Verfahren ist eine Übertragung von 2 Bits pro Sendesymbol möglich. Dadurch verdoppelt sich die Ausnutzung der zur Verfügung stehenden Bandbreite. Sei dabei B eine zu sendende Bitfolge der Länge K. Eine derartige Bitfolge B kann durch einen Kanal-Kodierer in ein Codewort C der Länge N kodiert werden, das dann durch den QPSK-Mapper in eine komplexe Symbolfolge M der Länge N/2 gemappt werden kann. Nach dem Senden über den Kanal kommen beim Empfänger die verrauschten komplexen Empfangssymbole R an. Diese Empfangssymbole werden durch den QPSK-Demapper in ein Codewort C' umgewandelt und mittels des Kanal-Dekodierers auf Gültigkeit geprüft und gegebenenfalls in eine Bitfolge C" korrigiert, die wiederum durch den QPSK-Mapper in die komplexe Symbolfolge M' gemappt werden kann. Sofern der Kanal-Dekodierer alle Fehler korrigieren konnte, gilt M = M' und C = C".

Weiterhin kann als Metrik zumindest eine der folgenden Berechnung verwendet werden:

- eine Berechnung der Summe der quadrierten euklidischen Distanz (SED - Squared Euclidean Distance),
- eine Berechnung der Summe der quadrierten Längenkreissegmente (SCD - Squared Circular Distance),
- eine Berechnung der n-ten Wurzel von SED,
- eine Berechnung der n-ten Wurzel von SCD.

Die Metrik vergleicht das empfangene Codewort R mit dem gültigen Codewort bzw. dem gemappten, gültigen Codewort M'. Es besteht die Möglichkeit, als Metrik eine Berechnung der quadrierten, euklidischen Distanz (SED) durchzuführen, gemäß

$$m = \sum \left| R - M' \right|^2 .$$

Wird beispielsweise ein QPSK-Verfahren verwendet, berechnet die SED-Metrik die Summe der Betragsquadrate zwischen den N/2-Elementen der verrauschten und der korrigierten komplexen Symbolfolge. Vorteilhaft kann bei Verwendung eines QPSK-Verfahrens die SED-Metrik durch die Summe der quadrierten Längen der Kreissegmente (SCD) zwischen den Symbolfolgen angenähert werden. Die SCD-Metrik folgt der folgenden Formel:

$$m = \sum \left( \arg\left( \frac{R}{M'} \right) \right)^2$$

Des Weiteren kann der Schwellenwert in Abhängigkeit des Signal-Rausch-Verhältnisses, der Blockwiederholungsrate, der gewünschten oder notwendigen Restbitfehlerwahrscheinlichkeit nach der Metrik und/oder der Eingangsbitfehlerrate vor dem Kanal-Dekodierer bestimmt werden, wobei die Eingangsbitfehlerrate von dem Signal-Rausch-Verhältnis abhängt.

Die Eingangsbitfehlerrate vor dem Kanal-Dekodierer wird nach Durchlaufen desselben zur Ausgangsbitfehlerrate nach dem Kanal-Dekodierer reduziert. Multipliziert man die Ausgangsbitfehlerrate mit der Fehlerrate des Metrik-Verfahrens so erhält man die Restbitfehlerwahrscheinlichkeit. Sowohl die Eingangsbitfehlerrate, als auch die Fehlerrate des Metrik-Verfahrens, sowie der Kanal-Dekodierer sind von dem Signal-Rausch-Verhältnis abhängig, wobei ebenfalls die Blockwiederholungsrate berücksichtigt werden muss, da diese die Rahmenbedingung stellt, innerhalb der fehlerhaft deklarierte Codewörter neu angefordert werden dürfen. Beträgt die Blockwiederholungsrate beispielsweise $10^{-3}$, so darf von 1000 Übertragungsblöcken im Mittel einer als fehlerhaft deklariert und neu angefordert werden. Somit kann der Schwellenwert sowohl unter wirtschaftlichen, als auch unter sicherheitsrelevanten Aspekten gewählt werden. Erhöht man beispielsweise die Blockwiederholungsrate so kann eine geringere Restbitfehlerwahrscheinlichkeit erreicht werden, da mehr Übertragungsblöcke im Mittel neu angefordert werden dürfen. In diesem Fall wurde die Datensicherheit auf Kosten der Wirtschaftlichkeit bzw. Verfügbarkeit erhöht. Es kann aber auch durch Verschieben des Schwellenwertes die gewünschte Restbitfehlerwahrscheinlichkeit in Abhängigkeit von der gewünschten Anwendung und in Wechselwirkung mit dem mindestens benötigten Signal-Rausch-Verhältnis und der maximal zulässigen Blockwiederholungsrate angepasst werden.

Vorteilhaft kann, insbesondere bei Verwendung einer SCD-Metrik oder einer SED-Metrik, die Maßzahl zudem zur Schätzung des Signal-Rausch-Verhältnisses herangezogen werden. Dadurch kann das Signal-Rausch-Verhältnis exakter geschätzt werden und zudem ist der technische Aufwand aufgrund der mehrfachen Verwendung der Maßzahl vorteilhaft reduziert.

Derartige Schätzungen des Signal-Rausch-Verhältnisses werden üblicherweise auch deshalb durchgeführt, weil das Signal-Rausch-Verhältnis nicht exakt bestimmt werden kann, da es sich um statistische Rauschprozesse handelt. Je nach Aufwand können die Schätzungen jedoch beliebig genau vorgenommen werden.

Weiterhin kann die Schätzung des Signal-Rausch-Verhältnisses auf einer Pilotschätzung oder einer blinden Schätzung basieren.

Signal-Rausch-Verhältnis-Schätzungen, die auf der Pilotschätzung basieren, verwenden beispielsweise die SCLS-Metrik und deren Maßzahl aus einem empfangenen und dem gleichen, dem Empfänger bekannten, gesendeten Pilotsymbole. Demzufolge kann aufgrund des Pilotsymbols das Signal-Rausch-Verhältnis vor allem bei starkem Rauschen genauer bestimmt werden. Nachteilig ist jedoch, dass in diesem Fall eine erhöhte Menge an Pilotsymbol-Daten übertragen werden muss, die den Datendurchsatz des Kanals belasten. Bei einer blinden Schätzung wird die Distanz zwischen empfangenen und hart entschiedenen Symbolen berechnet. Sofern die Störungen auf dem Kanal gering sind und kein Symbol in ein anderes verfälscht wird, liefert die blinde Schätzung das gleiche Ergebnis wie die Pilotschätzung. Wird eine Metrik als Basis für eine Signal-Rausch-Verhältnis-Schätzung verwendet, so liefert sie die gleichen Ergebnisse wie eine Pilotschätzung, solange der Kanal-Dekodierer alle Übertragungsfehler korrigieren kann. Übersteigt die durch den Kanal hervorgerufene Anzahl der Fehler die vom Kanal-Dekodierer korrigierbare Menge, so nähert sich die auf der Metrik basierende Signal-Rausch-Verhältnis-Schätzung der Qualität der blinden Schätzung an. Somit wird durch den Einsatz der Metrik die blinde Schätzung zumindest in Teilbereichen verbessert, ohne dass Pilotsymbole oder weitere Komplexität eingeführt werden müssen.

Weiterhin wird ein Empfängern und/oder ein Sender in einem weiteren Aspekt der Erfindung vorgeschlagen, der eine Komponente aufweist, die eine Metrik wie zuvor beschrieben, anwendet.

Mit einem derartigen Empfänger und Sender kann ein Kommunikationssystem aufgebaut werden, das die vorhergehend genannten Vorteile aufweist. Dieses Kommunikationssystem kann mittels des Schwellenwertes und unter Berücksichtigung des mindestens benötigten Signal-Rausch-Verhältnisses und der maximal zulässigen Blockwiederholungsrate eingestellt werden, wobei sowohl wirtschaftliche als auch sicherheitsrelevante Aspekte berücksichtigt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche Bauteile beziehen. Dabei sind aus den Zeichnungen ableitbare Maße oder Relationen der Bauteile zueinander nicht zwingend notwendig.

Es zeigen, jeweils schematisch:

Fig. 1 ein erfindungsgemäßes Übertragungsverfahren unter Verwendung einer Metrik,

Fig. 2 ein Wahrscheinlichkeitsdichten-Verlauf in Abhängigkeit einer normalisierten Metrik,

Fig. 3 ein kumulativen Dichten-Verlauf in Abhängigkeit der normalisierte Metrik,

Fig. 4 mehrere Restbitfehlerwahrscheinlichkeits-Verläufe in Abhängigkeit einer Eingangsbitfehlerrate vor einem Kanal-Dekodierer.

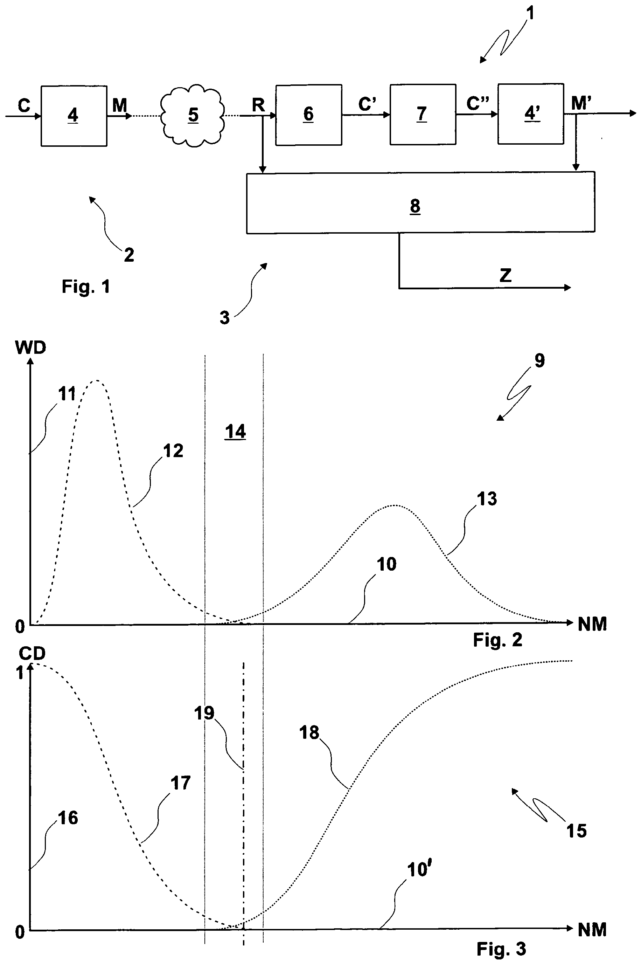

Bei einem Übertragungsverfahren 1, gemäß der Fig. 1, wird ein Codewort C von einem Sender 2 auf einen Empfänger 3 übertragen. Dabei kann dieses Übertragungsverfahren 1 bidirektional ausgestaltet sein, so dass eine Übertragung sowohl von dem Sender 2 auf den Empfänger 3, als auch von dem Empfänger 3 auf den Sender 2 stattfinden kann. Dabei können sowohl der Sender 2 als auch der Empfänger 3 der Art aufgebaut sein, dass sie jeweils einen Sender 2 und einen Empfänger 3 aufweisen. Demzufolge können nachfolgend beschriebene Verfahrensschritte sowohl auf dem Sender 2, als auch auf dem Empfänger 3 durchgeführt werden, da beide Komponenten 2, 3 ein Codewort C empfangen können. Dabei stellt das Codewort C eine Bitfolge B dar, die vor der Übertragung in dem Sender 2 durch einen nicht dargestellten Kanal-Kodierer codiert worden ist.

Mittels eines Mappers 4, insbesondere eines QPSK-Mappers, kann das Codewort C zu einem gemappten Codewort M gewandelt und von dem Sender 2 auf den Empfänger 3 über einen Kanal 5 übertragen werden. Beim Empfänger 3 kommt ein empfangenes, verrauschtes Codewort R an. Dieses empfangene, verrauschte Codewort R wird durch einen Demapper 6, insbesondere durch einen QPSK-Demapper, in ein ungemapptes, empfangenes Codewort C' gewandelt. Dieses ungemappte, empfangene Codewort C' wird nun wiederum durch einen Kanal-Dekodierer 7 in das Codewort C" korrigiert und auf Gültigkeit überprüft. Wird in diesem Schritt die Ungültigkeit des ungemappten, decodierten Codeworts C" festgestellt, so wird das empfangene, verrauschte Codewort R verworfen und gegebenenfalls nochmals von dem Sender 2 angefordert. Ist die Gültigkeit des ungemappten, decodierten Codewortes C" durch den Kanal-Dekodierer 7 festgestellt, so wird dieses nun wiederum durch den Mapper 4', insbesondere den QPSK-Mapper, auf der Seite des Empfängers 3 zu einem gemappten Codewort M' gewandelt. Mittels einer Metrik 8 wird nun das empfangene, verrauschte und gemappte Codewort R mit dem decodierten und gemappten Codewort M' zu einer Maßzahl Z verarbeitet. Diese Maßzahl Z ist dabei ein Maß für die Fehlerwahrscheinlichkeit des gültigen Codewortes C". Liegt dabei die Maßzahl Z im erwarteten Bereich, wird das Codewort C" als valide eingestuft und zur Weiterverarbeitung freigegeben.

In einem Wahrscheinlichkeitsdichten-Diagramm 9, wie in Fig. 2 dargestellt, ist auf einer Abszisse 10 eine normierte Metrik (NM) und auf einer Ordinate 11 die Wahrscheinlichkeitsdichte (WD) abgetragen. Ein Kurvenverlauf 12 bei richtiger Dekodierung (C=C") ist in dem Wahrscheinlichkeitsdichte-Diagramm 9 ebenso eingezeichnet, wie ein Kurvenverlauf 13 bei falscher Dekodierung (C<>C"). Beide Verläufe 12,13 überlappen sich in einem Überlappungsbereich 14. Tritt nun eine Maßzahl Z aus diesem Überlappungsbereich 14 auf, so bedeutet dies, dass die Wahrscheinlichkeit für eine richtige Dekodierung (C=C") und für eine falsche Dekodierung (C<>C") etwa gleich groß ist. Dabei ergibt das Verhältnis zwischen der Eingangsbitfehlerrate der Metrik 8 und der Ausgangsbitfehlerrate der Metrik 8 die Metrik-Bitfehlerrate. Diese Metrik-Bitfehlerrate muss noch mit der Ausgangsbitfehlerrate nach dem Kanal-Dekodierer multipliziert werden, um die Restbitfehlerwahrscheinlichkeit des Gesamtverfahrens zu erhalten. Dadurch kann die Bitfehlerrate des Kanal-Dekodierers 7 mittels einer Metrik 8 verbessert werden, so dass ein Gesamtverfahren resultiert, das eine geringere Restbitfehlerwahrscheinlichkeit hat, als ein Verfahren mit ausschließlich einem Kanal-Dekodierer 7.

In einem kumulativen Wahrscheinlichkeitsdichte-Diagramm 15, wie in Fig. 3 dargestellt, ist auf der Abszisse 10' die normierte Metrik und auf einer Ordinate 16 die kumulative Wahrscheinlichkeitsdichte (CD) dargestellt. Der Kurvenverlauf 17 für die richtige Kodierung und der Kurvenverlauf 18 für die falsche Kodierung ergeben sich aus den Kurvenverläufen 12,13 der Fig. 2. Dabei wird der Kurvenverlauf 12 invers zu dem Kurvenverlauf 17 und der Kurvenverlauf 13 zum Kurvenverlauf 18 aufintegriert. In diesem kumulativen Wahrscheinlichkeitsdichte-Diagramm ist der Überlappungsbereich 14 ebenfalls dargestellt. Wählt man nun einen Schwellenwert 19, so stellt man damit die Metrik-Bitfehlerrate, sowie eine Metrik-Blockwiederholungsrate ein, was die gesamte Restbitfehlerwahrscheinlichkeit und Blockwiederholungsrate maßgeblich beeinflusst. Durch Verschieben des Schwellenwertes 19 kann demzufolge die Restbitfehlerwahrscheinlichkeit bei vorgegebenem Signal-Rausch-Verhältnis und gewählter Blockwiederholungsrate angepasst werden. Dabei werden alle decodierten Codewörter C" verworfen, deren Maßzahl den Schwellenwert erreichen und/oder überschreiten.

Ein Schnittpunkt des Schwellenwertes 19 mit dem Kurvenverlauf 18 für die falsche Kodierung ergibt das Verhältnis zwischen der Eingangsbitfehlerrate vor der Metrik 8 und der Ausgangsbitfehlerrate nach der Metrik 8 und somit die Metrik-Bitfehlerrate, mit der die Ausgangsbitfehlerrate nach dem Kanal-Dekodierer multipliziert werden muss, um die Restbitfehlerwahrscheinlichkeit des Gesamtverfahrens zu erhalten.

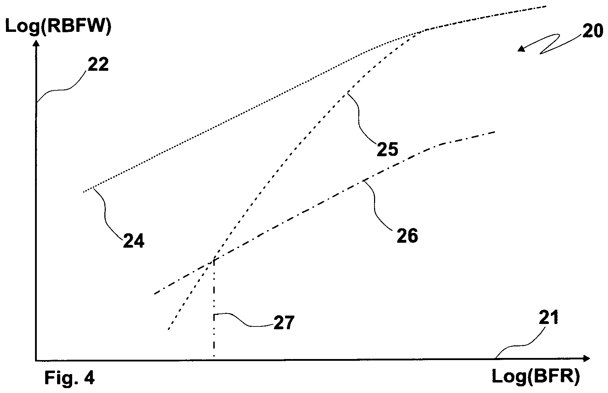

Ein Restbitfehlerwahrscheinlichkeits-Diagramm 20, wie in Fig. 4 dargestellt, zeigt den Zusammenhang zwischen der Restbitfehlerwahrscheinlichkeit (RBFW) und der Eingangsbitfehlerrate (BFR) vor dem Kanal-Dekodierer 7, in Abhängigkeit von dem verwendeten Mappingverfahren und/oder Kodierungsverfahren, sowie dem Signal-Rausch-Verhältnis. In dem Restbitfehlerwahrscheinlichkeit-Diagramm 20 ist auf einer Abszisse 21 die logarithmische Eingangsbitfehlerrate vor dem Kanal-Dekodierer und auf der Ordinate 22 die logarithmische Restbitfehlerwahrscheinlichkeit abgetragen. Ein Kurvenverlauf 24 zeigt das Verhalten für ein Verfahren, bei dem eine Codierung ohne Metrik 8 verwendet wird. Demzufolge entspricht die in dem Kurvenverlauf 24 ablesbare Restbitfehlerwahrscheinlichkeit der Ausgangsbitfehlerrate nach dem Kanal-Dekodierer 7. Ein Kurvenverlauf 25 zeigt den Verlauf der Restbitfehlerwahrscheinlichkeit unter Verwendung eines Kanal-Dekodierers 7 und einer Metrik 8, wobei der Schwellenwert 19 gemäß Fig. 3 in Abhängigkeit des Signal-Rausch-Verhältnisses derart ausgebildet ist, dass der Schnittpunkt des Kurvenverlaufes 17 für die richtige Kodierung mit dem Schwellenwert 19 immer den gleichen Wert aufweist. Mit anderen Worten ist in diesem Fall der Anteil der Codeworte, die richtig sind, aber verworfen werden, da sie den Schwellenwert 19 erreichen und/oder überschreiten, konstant. Der Kurvenverlauf 26 gibt die Restbitfehlerwahrscheinlichkeit bei einem Verfahren wieder, bei dem ein Kanal-Dekodierer und einen konstanten Schwellenwert 19 verwendet werden. Wird nun ein variabler Schwellenwert 19 und ein Kanal-Dekodierer 7 verwendet, so kann anhand des Kurvenverlaufes 25 bei einer gewünschten Restbitfehlerwahrscheinlichkeit, ablesbar an der Ordinate 22 zum einen die maximale Eingangsbitfehlerrate in dem Kanal-Dekodierer 7 bestimmt werden und daraus das minimal benötigte Signal-Rausch-Verhältnis hergeleitet werden. Außerdem kann der Schwellenwert 19 für diese Eingangsbitfehlerrate ermittelt werden, die für den Kurvenverlauf 26 eingestellt werden muss. Dies natürlich unter Berücksichtigung der jeweiligen gewählten Blockwiederholungsrate. Dementsprechend kann ein Schwellenwert 27 für die maximal zulässige Eingangsbitfehlerrate gewählt werden.

Ausführungsbeispiel:

Bei Verwendung eines DQPSK-Mapping-Prozesses (Differentielle-QPSK) und bei einer SCD-Metrik sowie einem (63,45) BCH-Codierungs-Verfahren wird eine maximale Restbitfehlerwahrscheinlichkeit von $10^{-8}$ und eine maximale Blockwiederholungsrate von $10^{-3}$ vor-

gegeben. Diese Randbedingungen kön nen bei einem Schwellenwert von Z = 13,59 ab einem Signal-Rausch-Verhältnis von 10,86 dB erreicht werden.

Soll beispielsweise für besonders sensible Anwendungen die maximal zulässige Restbitfehlerwahrscheinlichkeit weiter gesenkt werden, so muss hierfür der Schwellenwert 19 neu festgelegt und das sich daraus ergebende minimal benötigte Signal-Rausch-Verhältnis ermittelt werden.

## Patentansprüche

1. Verfahren zur Übertragung digitaler Daten, insbesondere für die Automatisierungstechnik, wobei ein digitales, über einen Kanal empfangenes, verrauschtes Codewort (R) mittels eines Kanal-Dekodierers (7) korrigiert und auf Gültigkeit geprüft wird, wobei ein ungültiges Codewort verworfen und ggf. das empfangene, verrauschte Codewort (R) neu angefordert, während ein gültiges Codewort (C'') weiterverarbeitet wird, **dadurch gekennzeichnet, dass** mittels einer Metrik (8) aus dem empfangenen, verrauschten Codewort (R) und dem gültigen Codewort (C'') eine Maßzahl (Z) ermittelt wird, wobei das gültige Codewort (C'') verworfen und ggf. das empfangene, verrauschte Codewort (R) neu angefordert wird, wenn die Maßzahl (Z) einen vorbestimmten Schwellenwert (19) erreicht und/oder überschreitet, wobei vor der Verarbeitung durch den Kanal-Dekodierer (7) das empfangene Codewort (R) mittels eines Demappers (6) entmappt wird und nach der Verarbeitung durch den Kanal-Dekodierer (7) das gültige Codewort (C'') mittels eines Mappers (4,4') gemappt wird.

2. Verfahren nach Anspruch 1, wobei zumindest einer der folgenden Fehlerschutzcodes verwendet wird:

    - ein BCH-Verfahren (Bose-Chaudhuri-Hocquenghem),
    - ein RS-Code (Reed-Solomon)
    - ein RM-Code (Reed-Muller)
    - ein LDPC-Code (Low-Density-Parity-Check).

3. Verfahren nach Anspruch 1, wobei mittels der Metrik (8) aus dem empfangenen Codewort (R) und dem gültigen, gemappten Codewort (M') eine Maßzahl (Z) ermittelt wird,

4. Verfahren nach einem der Ansprüche 1 oder 3, wobei der Mapper (4,4') und der Demapper (6) zumindest eines der folgenden Umwandlungsverfahren verwendet:

    - ein MPSK-Verfahren (Phasenmodulation mit M Phasen/Zuständen),
    - ein MQAM-Verfahren (Quadratur-Amplituden-Modulation mit M Phasen/Zuständen)
    - ein MASK-Verfahren (Amplitudenmodulation mit M Phasen/Zuständen)

5. Verfahren nach einem der vorhergehenden Ansprüche, wobei die Metrik (8) zumindest eine der folgenden Berechnungen aufweist:

    - eine Berechnung der Summe der quadrierten euklidischen Distanz (SED - Squared Euclidean Distance),
    - eine Berechnung der Summe der quadrierten Längenkreissegmente (SCD - Squared Circular Distance),
    - eine Berechnung der n-ten Wurzel von SED,
    - eine Berechnung der n-ten Wurzel von SCD.

6. Verfahren nach einem der vorhergehenden Ansprüche, wobei der Schwellenwert (19,27) in Abhängigkeit des Signal-Rausch-Verhältnisses, der Blockwiederholungsrate, der gewünschten Restbitfehlerwahrscheinlichkeit nach der Metrik (8) und/oder der Eingangsbitfehlerrate vor dem Kanal-Dekodierer (7) bestimmt wird.

7. Verfahren nach einem der vorhergehenden Ansprüche, wobei die Maßzahl (Z) zur Schätzung des Signal-Rausch-Verhältnisses verwendet wird.

8. Verfahren nach einem der vorhergehenden Ansprüche, wobei die Schätzung des Signal-Rausch-Verhältnisses qualitativ zwischen einer Pilotschätzung und einer blinden Schätzung liegt.

9. Empfänger mit einer Komponente, die eine Metrik (8), wie in einem der Ansprüche 1 bis 8 beschrieben, anwendet.

10. Sender mit einer Komponente, die eine Metrik (8), wie in einem der Ansprüche 1 bis 8 beschrieben, anwendet.

## Claims

1. Heat Method for the transmission of digital data, in particular for automation technology, wherein a digital noisy codeword (R), received across a channel, is corrected by means of a channel decoder (7) and checked for validity, wherein an invalid codeword is rejected and optionally the received noisy codeword (R) is rerequested while a valid codeword (C'') is processed further, **characterized in that** by means of a metric (8) from the received noisy codeword (R) and the valid codeword (C") an index (Z) is determined, wherein the valid codeword (C") is rejected and optionally the received noisy codeword (R) is rerequested if the index (Z) reaches and/or exceeds a predetermined threshold value (19), wherein, before the processing by the channel decoder (7), the received codeword (R) is demapped by means of a demapper (6) and, after the processing by the channel decoder (7), the valid codeword (C") is mapped by means of a mapper (4, 4').

2. Heat Method as in claim 1, wherein at least one of the following error protection codes is applied:

   - a BCH (Bose Chaudhuri Hocquenghem) method,
   - an RS (Reed Solomon) code,
   - an RM (Reed Muller) code,
   - an LDPC (Low Density Parity Check) code.

3. Method as in claim 1, wherein, by means of the metric (8), from the received codeword (R) and the valid mapped codeword (M') an index (Z) is determined.

4. Method as in one of claims 1 or 3, wherein the mapper (4, 4') and the demapper (6) apply at least one of the following conversion methods:

   - an MPSK (Phase Modulation with M Phase/States) method,
   - an MQUAM (Quadrature Amplitude Modulation with M Phases/States) method,
   - a MASK (Amplitude Modulation with M Phases/States) method.

5. Method as in one of the preceding claims, wherein the metric (8) comprises at least one of the following calculations:

   - calculation of the sum of the SEDs (Squared Euclidean Distance),
   - calculation of the sum of the SCDs (Squared Circular Distance),
   - calculation of the nth root of SED,
   - calculation of the nth root of SCD.

6. Method as in one of the preceding claims, wherein the threshold value (19, 27) is determined as a function of the signal-to-noise ratio, the block repetition rate, the desired residual bit error probability after the metric (8) and/or the input bit error rate before the channel decoder (7).

7. Method as in one of the preceding claims, wherein the index (Z) is utilized for the estimation of the signal-to-noise ratio.

8. Method as in one of the preceding claims, wherein the estimation of the signal-to-ratio is qualitatively between a pilot estimation and a blind estimation.

9. Receiver with a component that applies a metric (8) as described in one of claims 1 to 8.

10. Transmitter with a component that applies a metric (8) as described in one of claims 1 to 8.

## Revendications

1. Moteur Procédé destiné à la transmission de données numériques, en particulier pour la technique d'automatisation, un mot de code (R) bruité numérique reçu par le biais d'un canal étant corrigé au moyen d'un décodeur de canal (7) et soumis à un test de validité, un mot de code non valide étant rejeté, et éventuellement le mot de code (R) bruité reçu étant demandé de nouveau pendant la poursuite du traitement d'un mot de code (C") valide, **caractérisé en ce que**, au moyen d'une métrique (8), un chiffre d'indice (Z) est déterminé à partir du mot de code (R) bruité reçu et du mot de code (C") valide, le mot de code (C") valide étant rejeté, et éventuellement le mot de code (R) bruité reçu étant demandé de nouveau si le chiffre d'indice (Z) atteint et/ou dépasse une valeur de seuil (19) prédéfinie, le mot de code (R) reçu étant, avant le traitement par le décodeur de canal (7), démappé au moyen d'un démappeur (6), et le mot de code (C") valide étant, après le traitement par le décodeur de canal (7), mappé au moyen d'un mappeur (4, 4').

2. Procédé selon la revendication 1, au moins un des codes de protection contre les erreurs suivants étant utilisé :

   - un procédé BCH (Bose-Chaudhuri-Hocquenghem),
   - un code RS (Reed-Solomon),
   - un code RM (Reed-Muller),
   - un code LDPC (Low-Density-Parity-Check).

3. Procédé selon la revendication 1, un chiffre d'indice (Z) étant déterminé au moyen de la métrique (8) à partir du mot de code (R) reçu et du mot de code (M') mappé valide.

4. Procédé selon l'une des revendications 1 ou 3, le mappeur (4, 4') et le démappeur (6) utilisant au moins un des procédés de transformation suivants :

   - un procédé MPSK (modulation de phase avec M phases/états),
   - un procédé MQAM (modulation d'amplitude en quadrature avec M phases/états),

- un procédé MASK (modulation d'amplitude avec M phases/états).

5. Procédé selon l'une des revendications précédentes, la métrique (8) présentant au moins un des calculs suivants :

- un calcul de la somme du carré de la distance euclidienne (SED - Squared Euclidean Distance),
- un calcul de la somme du carré des segments de méridien (SCD - Squared Circular Distance),
- un calcul de la racine nième de SED,
- un calcul de la racine nième de SCD.

6. Procédé selon l'une des revendications précédentes, la valeur de seuil (19, 27) étant définie en fonction du rapport signal-bruit, du taux de répétition des blocs, de la probabilité d'erreur résiduelle sur les bits souhaitée selon la métrique (8) et/ou du taux d'erreur initiale sur les bits avant le décodeur de canal (7).

7. Procédé selon l'une des revendications précédentes, le chiffre d'indice (Z) étant utilisé pour l'estimation du rapport signal-bruit.

8. Procédé selon l'une des revendications précédentes, l'estimation du rapport signal-bruit se situant qualitativement entre une estimation pilote et une estimation aveugle.

9. Récepteur avec une composante qui utilise une métrique (8) telle qu'elle est décrite dans l'une des revendications 1 à 8.

10. Emetteur avec une composante qui utilise une métrique (8) telle qu'elle est décrite dans l'une des revendications 1 à 8.

Fig. 1

Fig. 2

Fig. 3

EP 2 681 633 B1

Fig. 4

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032533 A1
- US 2008294967 A1
- US 2009245432 A1

**In der Beschreibung aufgeführte Nicht-Patentliteratur**

- AS-Interface. **KRIESEL, W. ; MADELUNG O. W.** Das Aktuator-Sensor-Interface für die Automatisierung. Hanser-Verlag, 1999, vol. 2